# EUROPÄISCHE PATENTSCHRIFT

(11) **EP 1 298 328 B1**
(45) Veröffentlichungstag und Bekanntmachung des Hinweises auf die Patenterteilung: **21.06.2006**
(21) Anmeldenummer: 02021626.3
(22) Anmeldetag: 27.09.2002
(51) Int. Cl.: F16B 5/06

(54) **Form- oder Verkleidungsteil und Verfahren zu seiner Herstellung**
Moulding or lining element and method for its manufacture
Elément moulé ou d'habillage et son procédé de fabrication

(30) Priorität: 29.09.2001 DE 10148385
(43) Veröffentlichungstag der Anmeldung: 02.04.2003
(73) Patentinhaber: Trocellen GmbH, 53840 Troisdorf (DE)
(72) Erfinder: Roeger, Ingo, 53757 St. Augustin (DE); Ginster, Wilhelm, 53578 Windhagen (DE)
(74) Vertreter: Wübken, Ludger

(56) Entgegenhaltungen:
- EP-A- 0 046 839
- DE-A- 2 513 705
- DE-U- 20 101 328
- DE-U- 29 701 805
- GB-A- 784 528
- GB-A- 1 375 619
- US-A- 5 296 068

## Beschreibung

### Technisches Gebiet

Die Erfindung betrifft ein Form- oder Verkleidungsteil auf der Basis eines Polyolefinschaumstoffes mit Mitteln zur Aufnahme von Klips- oder Rastbefestigungen zur Montage des Form- bzw. Verkleidungsteils an einem weiteren Bauteil, zum Beispiel einer Blechwandung. Weiterer Gegenstand der vorliegenden Erfindung ist ein Verfahren zur Herstellung eines solchen Form- oder Verkleidungsteils.

Gattungsgemäße Form- oder Verkleidungsteile werden insbesondere zur Auskleidung des Innenraums von Kraftfahrzeugen, z. B. des Kofferraums, oder als Teilauskleidungen des Motorraums sowie des Fahrgastraums verwendet. Diese Form- oder Verkleidungsteile werden häufig mehrschichtig ausgeführt, insbesondere mit einer Basis aus vernetztem Polyolefinschaumstoff und einer damit kaschierten Vlies- oder Teppichschicht. Zur Befestigung solcher Form- oder Verkleidungsteile an der Karosserie werden häufig Klips- oder Rastverbindungen verwendet, wobei die Klips- oder Rastverbindungen einen Kopf und einen mit Rastmitteln versehenen Schaft aufweisen, der einerseits durch das Form- oder Verkleidungsteil gesteckt und andererseits in eine an der Karosserie angebrachten Halterung oder lochförmigen Öffnung eingesteckt wird.

### Stand der Technik

Damit die Klips- oder Rastbefestigungen auf der Sichtseite des Form- oder Verkleidungsteils nicht sichtbar sind, ist es bekannt, klammerförmige Aufnahmemittel aus Metall vorzusehen, in die ein Befestigungskopf einer Klips- oder Rastbefestigung einführbar ist und die andererseits einen Basisträger aufweisen, der mit der Rückseite des Form- oder Verkleidungsteils insbesondere durch Kleben verbunden ist.

Solche Befestigungsklammern sind einerseits aufwendig in der Herstellung und Montage, andererseits beim Recycling störend, da die aus Metall bestehenden Aufnahmeklammern vor dem Recyceln wieder von dem Form- oder Verkleidungsteil entfernt werden müssen.

Aus der US 5 296 068 A sind Verkleidungsteile bekannt, bei denen Befestigungsklipse durch Löcher einer Deckfolie gesteckt und anschließend mit einer rückwärtigen Schicht verschweißt werden. Die Befestigungsklipse sind somit irreversibel mit dem Verkleidungsteil verbunden. Eine ähnliche Befestigung eines Befestigungsklipses wird in der GB 784 528 offenbart.

Aus der GB 1 375 619 A sind Befestigungslaschen aus Hartplastik zur Aufnahme von Befestigungsklipsen bekannt. Bei Überbeanspruchung der Klipsverbindung kann entweder der Befestigungsklips oder die Verschweißung zwischen der Befestigungslasche und dem Substat zerstört werden.

### Aufgabe

Aufgabe der vorliegenden Erfindung ist es daher, ein gattungsgemäßes Form- oder Verkleidungsteil zur Verfügung zu stellen, das diese Nachteile nicht aufweist. Ein weiteres Anliegen der Erfindung ist es, ein Verfahren zur Herstellung eines solchen Form- oder Verkleidungsteils zur Verfügung zu stellen.

### Darstellung der Erfindung

Die Erfindung löst diese Aufgabe durch ein Form- oder Verkleidungsteil auf der Basis eines Polyolefinschaumstoffes mit Mitteln zur Aufnahme von Klips- oder Rastbefestigungen zur Montage des Form- oder Verkleidungsteils an einem weiteren Bauteil wie einer Blechwandung, bei dem die Mittel zur Aufnahme der Klips- oder Rastbefestigung als stoffschlüssig mit dem Form- oder Verkleidungsteil verbundene Aufnahmetaschen aus vernetztem Polyolefinschaumstoff einer Dichte von 100 bis 300 kg/m³ ausgebildet sind.

Bevorzugt sind die Aufnahmetaschen aus vernetztem Polyolefinschaumstoff mit dem Form- oder Verkleidungsteil verschweißt. Dieses kann entweder durch Heißluft-Verschweißung oder bevorzugt durch Ultraschallverschweißung erfolgen. Die Verschweißung der Aufnahmetaschen aus gleichartigem Material wie die Basis des Form- oder Verkleidungsteils gewährleistet einen homogenen Kraftfluß der Befestigungskräfte vom Befestigungsklips in das eigentliche Formteil.

Zur Herstellung eines Form- oder Verkleidungsteils wird nach einem bevorzugten Verfahren ein ebener Abschnitt eines Polyolefinschaumstoffes durch Verschweißen teilflächig unter Bildung eines taschenförmigen Aufnahmeraumes für den Kopf einer Klips- oder Rastbefestigung mit dem Form- oder Verkleidungsteil verbunden, wobei die teilflächige Verschweißung bevorzugt durch Ultraschallverschweißung erfolgt.

Hauptbestandteil des Form- oder Verkleidungsteil ist - wie dem Fachmann an sich bekannt - eine Basis aus chemisch vernetztem Polyolefinschaumstoff, insbesondere Polyethylenschaumstoff, einer Dicke von 2 bis 15 mm und einer Dichte von 50 bis 180 kg/m³. Diese Schaumstoffschicht kann auf seiner dem Innenraum zugewandten Oberfläche mit einer Struktur oder Prägung versehen sein, mit einer Folie kaschiert oder - nach einer bevorzugten Ausführungsform - mit einem Vlies, Gewebe oder Gewirke kaschiert sein.

Die erfindungsgemäßen Aufnahmetaschen werden auf der Rückseite, die im allgemeinen der Karosserie zugewandt ist, angeordnet. Die erfindungsgemäßen Aufnahmetaschen haben dabei insbesondere eine runde, ovale oder bevorzugt rechteckige Form, wobei sie nur im Randbereich mit dem Schaumstoff des Form- oder Verkleidungsteils verbunden sind, während der mittlere Bereich nicht mit dem Form- oder Verkleidungsteil verschweißt ist.

Die Verschweißung dieser Aufnahmetasche mit dem Form- oder Verkleidungsteil erfolgt dabei bevorzugt in der Weise, daß die Verschweißung nicht auf dem ganzen Umfang der Aufnahmetasche, sondern in einem Winkelbereich zwischen 200 und 340 Grad erfolgt, so daß der taschenförmiger Aufnahmeraum entsteht. An dieser Stelle weist die Aufnahmetasche bevorzugt eine Einkerbung und/oder einen Einschnitt auf, der in einer kreisförmigen, quadratischen oder rechteckigen Ausnehmung endet. Diese Ausnehmung kann dem Schaft der Klips- oder Rastbefestigung angepaßt werden, so daß die Klips- oder Rastbefestigung mit dem Kopfteil über die Einschlitzung bis in die Ausnehmung geführt werden kann.

Der taschenförmige Aufnahmeraum ist vorzugsweise in seiner Größe und Form der Größe und Form des Kopfteils der Klips- oder Rastbefestigung angepaßt. Soweit nicht eine runde Kopfform verwendet wird, sondern beispielsweise eine rechteckige, kann der taschenförmige Aufnahmeraum so gestaltet sein, daß die Klips- oder Rastbefestigung mit der schmaleren Seite des Kopfes in den taschenförmigen Aufnahmeraum geführt und dann durch eine 90 Grad Drehung quasi verrastet bzw. fixiert wird.

Die Elastizität des erfindungsgemäß verwendeten vernetzten Polyolefinschaumstoffs mit definiertem Dichtebereich von 100 bis 300 kg/m³ gewährleistet ein einfaches Einführen des Kopfes einer handelsüblichen Klips- oder Rastbefestigung in die Aufnahmetasche. Auf gleiche Weise können die Klips- oder Rastbefestigung auch wieder entfernt werden, ohne die Aufnahmetasche zu zerstören. Weiterhin ist gewährleistet, daß eine von der Materialdicke, der gewählten Dichte und der Form der Tasche abhängige, durch einfache Versuche zu ermittelnde definierte Ausreißkraft benötigt wird, um die Klips- oder Rastbefestigungen gewaltsam wieder zu entfernen. Diese definierte Ausreißkraft verhindert, daß die ganze Tasche bei einer eventuellen Entfernung des Form- oder Verkleidungsteils aus z. B. einer Fahrzeugkarosserie abgerissen wird, wenn die Klips- oder Rastbefestigung eine zu hohe Ausreißkraft des Schaftes aus der an der Karosserie angebrachten Halterung oder lochförmigen Öffnung aufweist. Die Klips- oder Rastbefestigung bleibt dann in der Karosserie stecken, während der Kopf der Klips- oder Rastbefestigung aus der Aufnahmetasche gezogen wird, ohne diese zu zerstören.

### Kurze Beschreibung der Zeichnung

Die Erfindung wird nachfolgend anhand eines Ausführungsbeispiels sowie der Zeichnung näher erläutert. Es zeigen dabei:
- Fig. 1: eine perspektivische Ansicht eines Verkleidungsteils
- Fig. 2: einen Querschnitt durch ein Verkleidungsteil gemäß Fig. 1
- Fig. 3: einen Querschnitt durch ein Verkleidungsteil mit eingesetztem Befestigungsklips
- Fig. 4: eine perspektivische Ansicht eines weiteren Verkleidungsteils
- Fig. 5: einen Schnitt durch ein Verkleidungsteil gemäß Fig. 4 mit eingesetztem Befestigungsklips
- Fig. 6: einen Befestigungsklips
- Fig. 7: einen Befestigungsklips

### Wege zur Ausführung der Erfindung

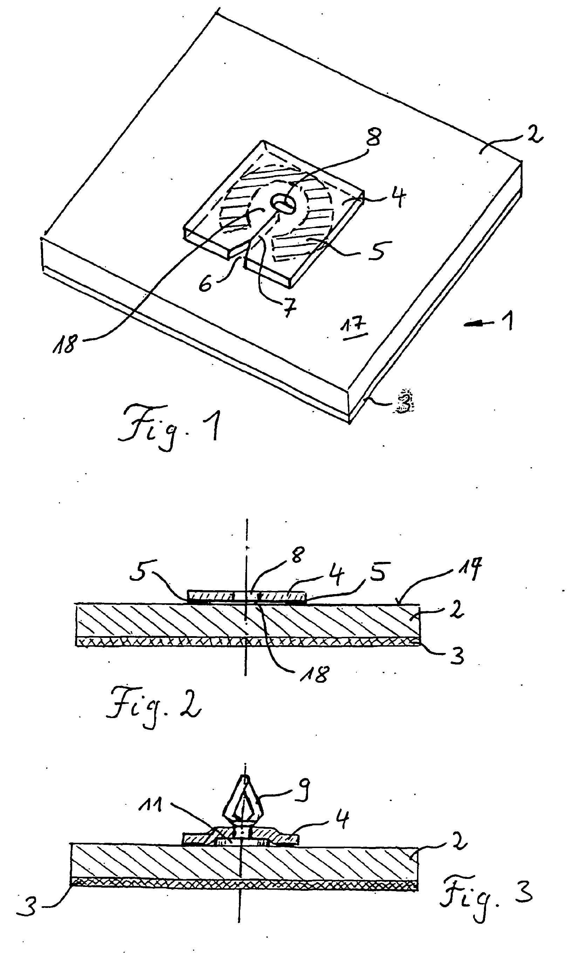

In Fig. 1 ist ein Abschnitt eines erfindungsgemäßen Formteils 1 dargestellt, wie es für die Auskleidung eines Kofferraums für ein Automobil verwendet wird. Es besteht aus der Basis 2 aus vernetztem Polyethylenschaumstoff einer Rohdichte von 100 kg/m³, das auf seiner Sichtfläche mit der Vlieskaschierung 3 versehen ist. Auf der der Karosserie zugewandten Außenseite 17 des Verkleidungsteils 1 ist die Aufnahmetasche 4 aufgeschweißt. Die Aufnahmetasche 4 besteht aus vernetztem Polyethylenschaumstoff einer Dichte von 200 kg/m³ und weist eine Dicke von 2 mm auf. Die Aufnahmetasche 4 ist durch Ultraschallverschweißung mit der Außenseite 17 der Basis 2 des Verkleidungsteils 1 verbunden, wobei die Schweißnaht 5 ringförmig über einen Winkelbereich von ca. 300 Grad ausgebildet ist. Für die Verschweißung wird eine Sonotrode mit entsprechender Formgebung eingesetzt. Die ringförmige Schweißnaht 5 läßt mittig einen taschenförmigen Aufnahmeraum 18 zur Aufnahme des Kopfes 14 eines Befestigungsklipses 10 (Fig. 7) frei.

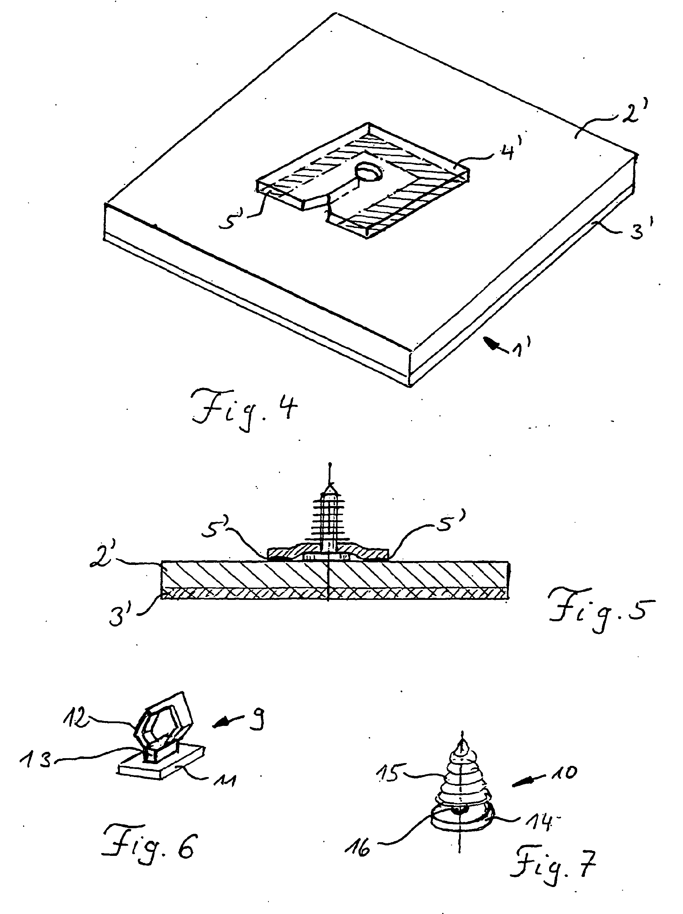

Zur leichten Einführung eines Befestigungsklipses 9,10, wie er in Figuren 6 und 7 in zwei verschiedenen Ausführungen dargestellt ist, weist die Aufnahmetasche 4 eine Einkerbung 6 mit anschließendem Schlitz 7 auf, der in der Ausnehmung 8 mündet. Die Ausnehmung 8 ist dabei mittig im Aufnahmeraum 18 angeordnet. Die Ausnehmung 8 weist eine Form auf, die dem zwischen dem Kopf 14 und dem Schaft 15 angeordneten Verbindungsstück 16 des Befestigungsklipses 10 angepaßt ist.

In Fig. 2 ist ein Querschnitt des in Fig. 1 dargestellten Abschnittes des Verkleidungsteils 1 dargestellt. Man erkennt hierbei die Aufnahmetasche 4 mit Schweißnaht 5 und mittig angeordneter Ausnehmung 8 sowie den Aufnahmeraum 18 zur Aufnahme eines Befestigungsklipses 10. In Fig. 3 ist der entsprechende Abschnitt des Verkleidungsteils 1 mit eingeführtem Befestigungsklips 9 dargestellt. Man erkennt, daß die Aufnahmetasche 4 elastisch verformt wird, um den Kopf 11 des Befestigungsklipses 9 aufzunehmen.

In Fig. 4 ist eine alternative Ausführungsform eines Verkleidungsteils 1' dargestellt, mit Basis 2' und Vlieskaschierung 3' sowie Aufnahmetasche 4'. Die Aufnahmetasche 4' unterscheidet sich in der Form der Schweißnaht 5' von dem Ausführungsbeispiel in Fig. 1: die Schweißnaht 5' ist in Fig. 4 so gestaltet, daß der Aufnahmeraum 18' etwa rechteckig ausgeführt ist zur passenden Aufnahme eines wie in Fig. 6 dargestellten Befestigungsklipses 9 mit eckigem Kopf 11.

Fig. 5 zeigt eine weitere Ausführung mit eingesetztem Befestigungsklips ähnlich dem in Fig. 7 dargestellten Befestigungsklips 10 mit rundem Kopf und rundem Schaft.

Fig. 6 und Fig. 7 zeigen zur Verdeutlichung an sich bekannte Befestigungsklipse 9 bzw. 10, einmal mit rechteckigem Kopf 11, entsprechend rechteckigem Schaft 12 und Verbindungsstück 13, während der in Fig. 7 dargestellte Befestigungsklips 10 einen runden Kopf 14, ein rundes Verbindungsstück 16 und einen kegelförmig geformten Schaft 15 aufweist.

### Legende

- 1, 1': Verkleidungsteil
- 2, 2': Basis
- 3, 3': Vlieskaschierung
- 4, 4': Aufnahmetasche
- 5, 5': Schweißnaht
- 6: Einkerbung
- 7: Schlitz
- 8: Ausnehmung
- 9: Befestigungsklips
- 10: Befestigungsklips
- 11: Kopf
- 12: Schaft
- 13: Verbindungsstück
- 14: Kopf
- 15: Schaft
- 16: Verbindungsstück
- 17: Außenseite
- 18, 18': Aufnahmeraum

## Patentansprüche

1. Form- oder Verkleidungsteil (1,1') auf der Basis eines Polyolefinschaumstoffes mit Mitteln zur Aufnahme von Klips- oder Rastbefestigungen (9,10) zur Montage des Form- oder Verkleidungsteils (1,1') an einem weiteren Bauteil wie einer Blechwandung, **dadurch gekennzeichnet, daß** die Mittel zur Aufnahme der Klips- oder Rastbefestigung (9,10) als stoffschlüssig mit dem Form- oder Verkleidungsteil (1,1') verbundene Aufnahmetaschen (4,4') aus vernetztem Polyolefinschaumstoff einer Dichte von 100 bis 300 kg/m³ ausgebildet sind.

2. Form- oder Verkleidungsteil (1,1') nach Anspruch 1, **dadurch gekennzeichnet, daß** die Aufnahmetaschen (4,4') aus vernetztem Polyolefinschaumstoff mit dem Form- oder Verkleidungsteil (1,1') verschweißt sind.

3. Verfahren zur Herstellung eines Form- oder Verkleidungsteils (1,1') nach Anspruch 1, **dadurch gekennzeichnet, daß** ein ebener Abschnitt eines Polyolefinschaumstoffes durch Verschweißen teilflächig unter Bildung eines taschenförmigen Aufnahmeraumes (18,18') für den Kopf (11,14) einer Klips- oder Rastbefestigung (9,10) mit dem Form- oder Verkleidungsteil (1,1') verbunden wird.

4. Verfahren nach Anspruch 3, **dadurch gekennzeichnet, daß** die teilflächige Verschweißung durch Ultraschallverschweißung erfolgt.

## Claims

1. Moulding or lining element (1, 1') based on a polyolefin foam with means for receiving clip or snap-in fastenings (9, 10) for mounting the moulding or lining element (1, 1') on a further component, such as a sheet-metal wall, **characterized in that** the means for receiving the clip or snap-in fastening (9, 10) are formed as receiving pockets (4, 4') of crosslinked polyolefin foam of a density of 100 to 300 kg/m³, integrally connected to the moulding or lining element (1, 1').

2. Moulding or lining element (1, 1') according to Claim 1, **characterized in that** the receiving pockets (4, 4') of crosslinked polyolefin foam are welded to the moulding or lining element (1, 1').

3. Method for manufacturing a moulding or lining element (1, 1') according to Claim 1, **characterized in that** a planar portion of a polyolefin foam is connected to the moulding or lining element (1, 1') by welding over part of its surface area, thereby forming a pocket-shaped receiving space (18, 18') for the head (11, 14) of a clip or snap-in fastening (9, 10).

4. Method according to Claim 3, **characterized in that** the part-area welding takes place by ultrasonic welding.

## Revendications

1. Elément moulé ou d'habillage (1, 1') à base d'une mousse de polyoléfine avec des moyens pour recevoir des fixations par clipsage ou encliquetage (9, 10) en vue du montage de l'élément moulé ou d'habillage (1, 1') sur une autre pièce comme une paroi de tôle, **caractérisé en ce que** les moyens pour recevoir la fixation par clipsage ou encliquetage (9, 10) sont réalisés sous la forme de logettes de réception (4, 4'), assemblées en continuité de matière avec l'élément moulé ou d'habillage (1, 1'), en une mousse de polyoléfine réticulée présentant une densité de 100 à 300 kg/m³.

2. Elément moulé ou d'habillage (1, 1') selon la revendication 1, **caractérisé en ce que** les logettes de réception (4, 4') en mousse de polyoléfine réticulée sont soudées à l'élément moulé ou d'habillage (1, 1').

3. Procédé de fabrication d'un élément moulé ou d'habillage (1, 1') selon la revendication 1, **caractérisé en ce qu'**une partie plane d'une mousse de polyoléfine est partiellement assemblée en surface à l'élément moulé ou d'habillage (1, 1') par soudage en formant un espace de réception en forme de logette (18, 18') pour la tête (11, 14) d'une fixation par clipsage ou encliquetage (9, 10).

4. Procédé selon la revendication 3, **caractérisé en ce que** le soudage superficiel partiel est effectué par soudage aux ultrasons.
